**Europäisches Patentamt**

(19) **European Patent Office**

**Office européen des brevets**

(11) Numéro de publication: **0 200 596**
**B1**

(12) **FASCICULE DE BREVET EUROPEEN**

(45) Date de publication du fascicule du brevet:
16.08.89

(51) Int. Cl.⁴: **G01T 1/16**

(21) Numéro de dépôt: **86400652.3**

(22) Date de dépôt: **26.03.86**

(54) Système de suppression du bruit et de ses variations pour la détection d'un signal pur dans signal discret bruité mesuré.

(30) Priorité: **02.04.85 FR 8504977**

(43) Date de publication de la demande:
**10.12.86 Bulletin 86/45**

(45) Mention de la délivrance du brevet:
**16.08.89 Bulletin 89/33**

(84) Etats contractants désignés:
**BE DE GB IT**

(56) Documents cités:
NUCLEONICS,
vol. 24, no. 8, août 1966, pages 118-121, New York, US;
W.L. NICHOLSON: "Statistics of net-counting-rate estimation with dominant background corrections"
HEALTH PHYSICS,
vol. 32, no. 1, janvier 1977, pages 1-14, Pergamon Press, Oxford, GB; J.J. DONN et al.: "The statistical interpretation of counting data from measurements of low-level radioactivity"
NUCLEAR INSTRUMENTS AND METHODS,
vol. 206, no. 3, mars 1983, pages 501-506, North-Holland Publishing Co., Amsterdam, NL; T.J. SUMERLING: "Calculating a decision level for use in radioactivity counting experiments"

(73) Titulaire: **COMMISSARIAT A L'ENERGIE ATOMIQUE,**
**31/33, rue de la Fédération, F-75015 Paris(FR)**

(72) Inventeur: **Rambaut, Michel, 57H, rue de la Hacquinière,**
**F-91440 Bures sur Yvette(FR)**

(74) Mandataire: **Mongrédien, André et al, c/o**
**BREVATOME 25, rue de Ponthieu, F-75008 Paris(FR)**

ACTORUM AG

## Description

La présente invention a pour objet un système de suppression du bruit et de ses variations pour la détection d'un signal pur dans un signal discret bruité mesuré. Ce système évalue l'information apportée par le signal mesuré. Cette information se traduit par une probabilité de fausse détection, c'est-à-dire une probabilité de détecter un signal pur là où il n'y en a pas. L'information peut être comparée à un seuil si l'on désire uniquement détecter la présence ou l'absence d'un signal pur, ce seuil correspondant à un taux de fausse détection prédéterminé ; l'information peut aussi être évaluée si on désire connaître le degré de certitude de l'existence d'un signal pur.

L'invention concerne la détection des signaux discrets, c'est-à-dire les signaux produits par des événements discontinus. L'invention s'applique notamment à la détection des rayonnements corpusculaires, tels que les rayons neutroniques ou les rayons gammas.

La détection d'un signal pur dans un signal bruité mesuré suppose que l'on peut supprimer le bruit dans ledit signal mesuré. Deux cas se présentent : le taux moyen de bruit est constant et le taux moyen de bruit est fluctuant. L'invention concerne un système de détection lorsque le taux moyen de bruit est fluctuant. Un taux moyen de bruit constant n'étant qu'un cas particulier d'un taux moyen de bruit fluctuant, le système de l'invention peut a fortiori être utilisé pour la détection lorsque le taux moyen de bruit est constant.

La détection d'un rayonnement corpusculaire particulier, par exemple nucléaire, se fait en présence d'un bruit corpusculaire ayant plusieurs causes. Dans le cas d'un rayonnement nucléaire, une partie du bruit est due au rayonnement cosmique et l'autre partie est due à la radioactivité naturelle des terrains et des roches. Il existe aussi un bruit dû au détecteur utilisé. Le rayonnement cosmique peut varier au cours du temps et le bruit corpusculaire dû aux roches et au terrain est essentiellement variable, selon le lieu où se fait la mesure. Un rayonnement particulier ne peut donc être détecté que si l'on connaît le bruit, ou bien si on en a une estimation suffisante.

Le stockage des informations est effectué pendant une durée de temps limitée $\Delta T$. Ce stockage des informations se fait de façon discrète : lorsqu'une particule est détectée, le contenu d'une mémoire est augmenté d'une unité. En général, un ou plusieurs paramètres définissent l'événement nucléaire détecté. Dans le cas où cet événement ne dépend que d'un paramètre unique, celui-ci peut être par exemple l'énergie ; c'est le cas typique de la détection d'un rayonnement gamma à l'aide d'un germanium intrinsèque ou d'un scintillateur NaI associé à un photomultiplicateur. Ce paramètre unique peut aussi être le temps, par exemple lorsqu'on mesure le temps de vol d'une particule. La condition de détection peut être également une fonction logique complexe dépendant de l'état de plusieurs détecteurs durant un intervalle de temps très court, en général de l'ordre de quelques dizaines de nanosecondes, notamment dans le cas de la détection de particules dans une chambre à fils.

Usuellement, pour savoir si un signal a été détecté à l'aide d'un stockage effectué pendant un intervalle de temps $\Delta T$, la pratique courante consiste à apprécier de quelle valeur le comptage obtenu dépasse l'estimation du bruit dont on dispose. Ce bruit peut notamment être apprécié en cours d'expérience en extrapolant ou en interpolant les niveaux du signal détecté dans différents intervalles, par exemple énergétiques. Pour cela, il faut que le taux de comptage dans les intervalles où l'on est sûr qu'il n'y a pas de bruit soit suffisant, pour pouvoir faire une estimation de la densité de probabilité du bruit dans les intervalles où l'on cherche à détecter un rayonnement particulier.

De manière classique, on estime qu'il y a effectivement un signal lorsque le taux de comptage N mesuré pendant une durée $\Delta T$ est tel que

$$N > B + K.\sqrt{B},$$

où B est le taux moyen de bruit estimé et K une constante égale à quelques unités.

Ce critère connu de détection n'est pas satisfaisant car il est empirique, la valeur de K étant choisie de façon non déterministe en se fondant sur des expériences antérieures.

Un but de l'invention est de fournir un système de suppression du bruit et de ses variations pour la détection d'un signal pur fondée sur un critère rationnel, déduit des lois de probabilité d'apparition du bruit et du rayonnement attendu.

Dans l'art antérieur, un taux de comptage n'est pris en compte que s'il est supérieur au taux moyen de bruit augmenté d'un certain nombre de fois l'écart type

$$\sqrt{B}.$$

Selon l'invention, on considère, au contraire, que tout dépassement du taux moyen de bruit constitue une information sur la présence ou l'absence d'un signal pur. Cette information est faible lorsque la différence entre le taux de comptage et le taux moyen de bruit est faible.

Plus la différence entre le taux de comptage et le taux moyen de bruit est importante, plus l'information apportée par la mesure est importante et plus la probabilité de fausse détection est faible. Le critère pratique de détection d'un signal pur est donc l'obtention d'une information suffisante, c'est-à-dire supérieure à un seuil $I_m$, ce seuil étant fonction d'un taux de fausse détection que l'on se fixe.

L'information I apportée par la mesure peut être exploitée de deux façons: elle peut être simplement comparée eu seuil $I_m$ pour discriminer la présence ou l'absence d'un signal pur ; on peut aussi mesurer la différence $I-I_m$ pour évaluer le degré de certitude de la présence d'un signal pur.

La comparaison entre les informations I et $I_m$ peut être faite indirectement sur la probabilité de fausse détection et le taux de fausse détection associés à ces informations. L'information est cependant utilisée de préférence pour l'exploitation, par exemple par visualisation d'un signal représentant l'information en fonction des comptages.

Le système de détection de l'invention utilise un comptage dans une voie de référence pour mesurer le bruit et un comptage dans la voie de signal. Le taux moyen de bruit $M_2$ dans la voie de signal est supposé proportionnel au taux moyen de bruit $M_3$ dans la voie de référence. Ceci est conforme à la constatation expérimentale selon laquelle la densité de probabilité du spectre de bruit, à énergie donnée, ne varie pas au cours du temps. On notera $\lambda$ le rapport du taux moyen de bruit $M_3$ au taux moyen de bruit $M_2$.

La détection d'un signal pur dans la voie de signal consiste à comparer l'information apportée par les taux de comptage $N_2$ et $N_3$ de la voie de signal et de la voie de référence, pour une valeur $\lambda_E$ estimée du rapport $\lambda$, à un seuil d'information $I_m$ prédéterminé. Ce seuil est défini par le taux de fausse détection que l'on se fixe.

Selon une variante préférée du système de l'invention, la comparaison entre l'information I apportée par les comptages $N_2$ et $N_3$ pour la valeur estimée $\lambda_E$ de $\lambda$ et le seuil $I_m$ est remplacée par une comparaison entre la probabilité de fausse détection PF, associée auxdits comptages $N_2$ et $N_3$ pour la valeur estimée $\lambda_E$ de $\lambda$, et le taux de fausse détection fixé TF.

Selon une variante de l'invention, la fonction information est définie par

$$I = -\text{Log}\frac{PF}{1 - PF}$$

on définit de la même manière $I_m$ par

$$I_m = -\text{Log}\frac{TF}{1 - TF}$$

Selon une autre variante préférée du système de détection de l'invention, dans le cas où on connaît une fonction reliant le taux moyen de signal pur $M_1$ dans la voie de signal, le taux moyen de bruit $M_2$ dans la voie de signal, le taux moyen de bruit $M_3$ dans la voie de référence correspondant au taux de fausse détection prédéterminé TF, on compare ledit taux moyen de signal pur $M_1$ au taux estimé par $N_2 - N_3/\lambda_E$, où $\lambda_E$ est une valeur estimée de $\lambda$.

Cette comparaison produit le même résultat que la comparaison directe entre la probabilité de fausse détection PF et le taux de fausse détection TF, mais présente souvent l'avantage d'être plus facile à effectuer en pratique.

Dans la variante qui vient d'être décrite, on suppose connue une relation du type $f(TF, M_1, M_2, M_3)=0$. Compte tenu de $\lambda=M_3/M_2$, ceci revient à connaître une relation du type $g(TF, M_1, M_2, \lambda)=0$. Pour les comptages $N_2$ et $N_3$ mesurés durant le temps $\Delta T$, cette relation devient $g(PF, N_2-N_3/\lambda_E, N_3/\lambda_E, \lambda_E)=0$.

L'utilisation pratique de la relation $g=0$ pour décider si un signal pur est présent dans la voie de signal peut conduire, dans certains cas, à des calculs longs et compliqués. La durée du calcul direct de la probabilité de fausse détection peut notamment être fonction de la valeur des comptages mesurés. La durée de ce calcul peut être en particulier incompatible avec une détection en temps réel, si la durée de chaque comptage est de une seconde par exemple.

Selon une variante préférée du système de détection de l'invention, la fonction g est tabulée. Ceci permet de calculer rapidement le taux moyen de signal pur $M_1$ pour le comparer à $N_2-N_3/\lambda_E$ ou la probabilité de fausse détection PF pour la comparer au taux de fausse détection TF. La tabulation de la fonction g présente l'avantage important que la durée du calcul du taux moyen de signal pur $M_1$, ou de la probabilité de fausse détection PF, est pratiquement indépendante des valeurs de comptage $N_2$ et $N_3$ mesurées.

La fonction g peut être tabulée pour plusieurs valeurs différentes du taux de fausse détection TF. La comparaison de la valeur estimée du signal $N_2-N_3/\lambda_E$ aux valeurs de $M_1$ correspondant à chaque taux de fausse détection TF permet de mesurer l'information apportée par les comptages.

Dans le cas où la fonction g est tabulée pour une valeur unique du taux de fausse détection TF, la comparaison entre $N_2-N_3/\lambda_E$ et $M_1$ situe l'information I par rapport au seuil $I_m$, mais ne détermine pas la valeur de l'information I.

La mémorisation sous forme de tables de la fonction g est particulièrement facile dans le cas où des relations linéaires peuvent être mises en évidence entre les variables de ladite fonction g ou entre des fonctions simples desdites variables.

Les rayonnements corpusculaires, tels que les rayons neutroniques ou les rayons gammas, sont des rayonnements pour lesquels le nombre de particules détectées pendant un intervalle de temps $\Delta T$ est une variable aléatoire dont la densité de probabilité est celle de la loi de Poisson.

L'invention remarque que des relations sensiblement linéaires existent entre des fonctions simples des variables de la fonction g dans ce cas. En particulier, à $M_2$ et TF constants, Log R, où $R = M_1/M_0$, est une fonction sensiblement linéaire de

$$Log\left(1+\frac{1}{\lambda}\right)$$

et, pour $\lambda$ infini et TF constant, $Log(M_0)$ est une fonction sensiblement linéaire de $Log(M_2)$. $\lambda$ est infini lorsque le taux moyen de bruit $M_2$ est constant ; dans ce cas particulier, le taux moyen de signal $M_1$ est noté $M_0$.

Chaque relation sensiblement linéaire est mémorisée sous la forme d'un ensemble de couples tels que

$$\left(Log\ R,\ Log\left(1+\frac{1}{\lambda}\right)\right)$$

pour différentes valeurs de $\lambda$. Chaque relation est mémorisée pour une pluralité de valeurs de $M_2$ et de TF. Le nombre de couples mémorisés pour chaque relation dépend de la linéarité de cette relation et de la précision souhaitée dans les calculs. Il dépend également du volume de mémoire disponible dans le système.

La mémorisation de chaque relation linéaire est ramenée à deux couples de valeurs lorsque cette relation est estimée suffisamment linéaire pour l'usage prévu. C'est le cas lorsque la densité de probabilité du nombre de particules détectées pendant un intervalle de temps $\Delta T$ est celle de la loi normale. On notera que la loi normale est une approximation classique de la loi de Poisson dès lors que les taux de comptage sont de l'ordre de quelques dizaines.

Les caractéristiques et avantages de l'invention ressortiront mieux de la description qui va suivre, faite à titre illustratif mais non limitatif, en référence aux dessins annexés, sur lesquels :
- la figure 1 représente schématiquement le système de l'invention,
- la figure 2 représente graphiquement la relation entre Log(R) et

$$Log\left(1+\frac{1}{\lambda}\right)$$

pour différentes valeurs de TF, pour une valeur de $M_2$ égale à 1000, dans le cas où la densité de probabilité du nombre de particules détectées est celle de la loi de Poisson,
- la figure 3 représente graphiquement la relation entre $Log(M_1)$ et $Log(M_2)$ pour différentes valeurs de TF, pour une valeur de $\lambda$ égale à l'unité, dans le cas où la densité de probabilité du nombre de particules détectées est celle de la loi de Poisson,
- les figures 4 à 6 illustrent graphiquement la détermination de Log(R), en fonction du taux de comptage $N_3$ et de l'estimation $\lambda_E$ de $\lambda$, au moyen des relations linéaires mémorisées,
- la figure 7 illustre graphiquement la détermination de $Log(M_0)$, en fonction du taux de comptage $N_3$ et de l'estimation $\lambda_E$ de $\lambda$, au moyen des relations linéaires mémorisées.

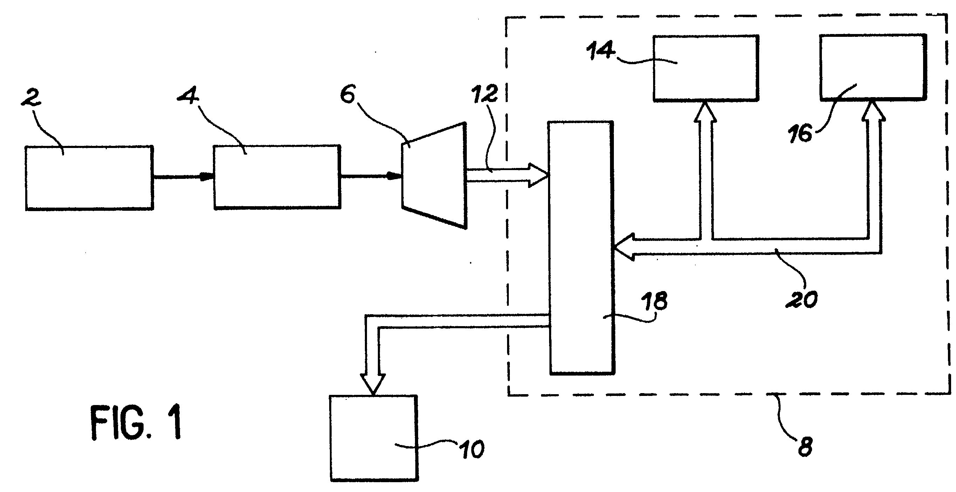

Le système représenté sur la figure 1 comprend un détecteur 2, un moyen de mise en forme 4, un convertisseur analogique numérique 6, un moyen de traitement 8 et un moyen de signalisation 10.

Le détecteur 2 dépend du rayonnement à détecter. Pour la détection de rayons gammas, ce détecteur peut être un germanium intrinsèque ou un scintillateur NaI associé à un photomultiplicateur ; pour la détection de neutrons, le détecteur est par exemple un compteur à He3.

Le détecteur 2 délivre une impulsion de tension pour chaque événement détecté. Cette impulsion est reçue par le moyen de mise en forme 4. Il peut comprendre notamment en série un amplificateur, un circuit de mise en forme et un discriminateur.

Le convertisseur analogique-numérique 6 est disposé en aval du moyen de mise en forme 4. Il convertit l'amplitude de l'impulsion reçue en un signal binaire, par exemple sur 8 bits dans le cas d'un scintillateur NaI ou 12 bits dans le cas d'un germanium intrinsèque. Ce signal binaire est transmis au moyen de traitement 8 par une voie 12.

Le moyen de traitement 8 comprend un processeur 14, au moins une mémoire 16 et un circuit d'entrée-sortie 18. Ces éléments sont reliés par une voie 20 comprenant des lignes d'adresse, des lignes de données et des lignes de commande

Le moyen de signalisation 10 est commandé par le processeur 14 à travers le circuit d'entrée-sortie 18 et une voie 22. Il peut comprendre notamment des moyens d'alerte visuels et sonores. Ceux-ci sont déclenchés lorsqu'un signal pur est détecté, dans le cas où l'information I est comparée à un seuil unique

$I_m$. Ils délivrent la valeur de l'information I si celle-ci est estimée par comparaison à plusieurs seuils différents.

Le fonctionnement du système est le suivant. Chaque impulsion délivrée par le détecteur est, selon son amplitude, prise en compte dans la voie de signal ou dans la voie de référence ou ignorée. Ceci peut être réalisé par un analyseur multicanaux (non représenté). Après chaque comptage de durée $\Delta T$, le processeur relève les taux de comptage $N_2$ et $N_3$ mémorisés et correspondant au nombre d'impulsions dans la voie de signal et dans la voie de référence, évalue le valeur $\lambda_E$ du rapport $\lambda$ entre les taux moyens de bruit $M_3$ et $M_2$ dans la voie de référence et dans la voie de signal et compare la probabilité de fausse détection PF associée aux taux de comptage $N_2$ et $N_3$ et à l'estimation $\lambda_E$ de $\lambda$, au taux de fausse détection prédéterminé TF, ou une fonction de ladite probabilité de fausse détection et une fonction du taux de fausse détection prédéterminé, cette fonction pouvant être l'information.

La valeur $\lambda_E$ du rapport $\lambda$ peut être réajustée périodiquement, par exemple après chaque comptage, ou déterminée une seule fois si on peut admettre que les conditions expérimentales permettent de considérer $\lambda$ constant. Dans ce dernier cas, la valeur estimée $\lambda_E$ de $\lambda$ est la moyenne de p valeurs du rapport entre les taux de comptages $N_3$ et $N_2$, où p est un nombre entier, ces comptages étant effectués en l'absence de tout rayonnement particulier. Dans le cas où la valeur estimée $\lambda_E$ de $\lambda$ est réajustée après chaque comptage, cette estimation $\lambda_E$ peut être prise égale à la moyenne des p valeurs de $\lambda$, associé aux p comptages précédents celui où on cherche à détecter un rayonnement pur lesdits comptages étant supposés effectués hors de la présence de tout rayonnement pur. Le choix de p dépend de la vitesse des variations de $\lambda$. Si p est trop faible, $\lambda_E$ va changer rapidement lorsqu'apparaît un signal ; si $\lambda_E$ change trop, le signal peut ne plus être détectable. Si p est trop élevé, $\lambda_E$ n'est plus une bonne estimation de $\lambda$ ; l'estimation peut être fausse au moment du comptage.

On va maintenant décrire, à titre d'exemple, le fonctionnement du système de l'invention pour la détection d'un rayonnement corpusculaire. La densité de probabilité du nombre de particules détectées est celle de la loi de Poisson.

La probabilité pour qu'un rayonnement existe, que le stockage $N_2$ contienne ou non un événement qui lui soit dû est, à $M_3$ constant :

$$P_1 = e^{-M_2} \cdot \sum_{J=0}^{J=N_2} \frac{M_2^{J}}{J!}$$

Par ailleurs, la probabilité pour que $M_3$ soit compris entre $M_3$ et $M_3+dM_3$ est :

$$P_2 = \frac{e^{-M_3} \cdot \frac{(M_3)^{N_3}}{N_3!} \cdot dM_3}{\int_{0}^{\infty} e^{-M_3} \cdot \frac{(M_3)^{N_3}}{N_3!} \cdot dM_3}$$

La probabilité d'absence d'un rayonnement pur, ou probabilité de fausse détection, est alors:

$$PF = \int_{\{\lambda \cdot N_2\}}^{\infty} P_1 \cdot P_2 ,$$

où { } signifie "partie entière de", c'est-à-dire, en utilisant $\lambda M_2 = M_3$,

$$PF = \sum_{J=N_2+1}^{\infty} \left( \frac{\lambda^{N_3+1}}{(1+\lambda)^{J+N_3+1}} \cdot \frac{(J+N_3)!}{J!/N_3!} \cdot Y \right)$$

$$\text{avec } Y = e^{-(1+\lambda).N_2} \cdot \sum_{K=0}^{K=J+N_3} \frac{((1+\lambda).N_2)^K}{K!}$$

Le taux de fausse détection TF s'obtient en remplaçant dans l'expression de PF :

$$N_2 \text{ par } \{M_1\} + \{M_2\}$$
$$N_3 \text{ par } \{M_3\}$$

où { } signifie "partie entière de".

Compte tenu de $\lambda = M_3/M_2$, cette relation est de la forme $g(TF, M_1, M_2, \lambda) = 0$.

Ainsi qu'on l'a indiqué plus haut, lorsque la densité de probabilité du nombre d'événements détectés suit une loi de Poisson, on peut mettre en évidence des relations sensiblement linéaires entre des fonctions simples des variables TF, $M_1$, $M_2$ et $\lambda$. Ceci permet de mémoriser sous forme de tables la fonction g et de déterminer pratiquement sans calcul le taux moyen de signal $M_1$ correspondant à un taux de fausse détection prédéterminé TF, pour un taux de bruit $M_2$ et un rapport $\lambda_E$ estimés, et de comparer ledit taux moyen de signal $M_1$ au taux estimé égal à $N_2 - N_3/\lambda_E$.

Si la fonction g est tabulée pour plusieurs valeurs de TF, l'information peut être évaluée en calculant les valeurs de $M_1$ correspondant à chaque TF, pour un taux de bruit $M_2$ et un rapport $\lambda_E$ estimés, puis en recherchant les valeurs $M'_1$ et $M''_1$ encadrant la valeur estimée $N_2 - N_3/\lambda_E$. Ces taux moyens de signal $M'_1$ et $M''_1$ correspondent à des taux de fausse détection TF' et TF" donc à des informations I' et I". Ces deux valeurs constituent les valeurs inférieure et supérieure de l'information I apportée par les comptages $N_2$ et $N_3$ pour la valeur estimée $\lambda_E$ de $\lambda$.

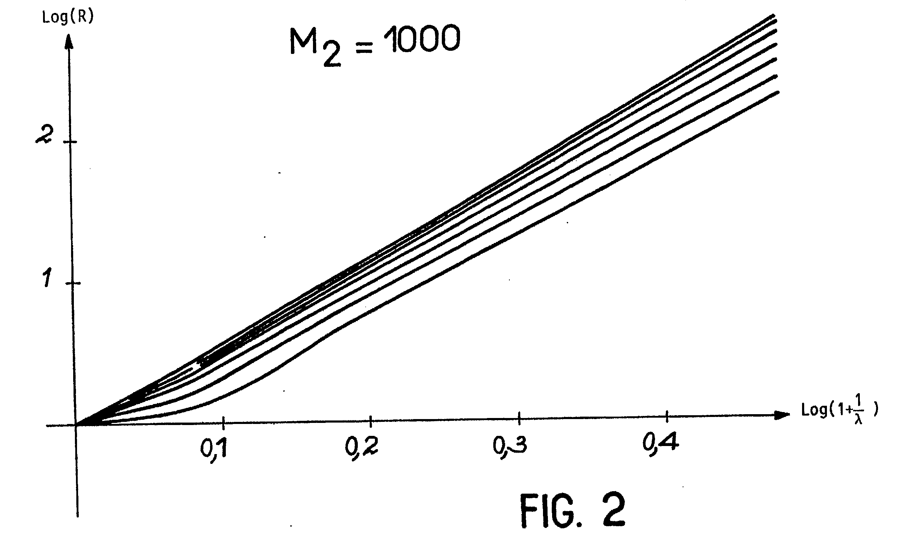

La figure 2 illustre la relation sensiblement linéaire reliant à $M_2$ fixé, LogR et

$$Log(1+\frac{1}{\lambda})$$

où $R = M_1/M_0$. $M_0$ est le taux moyen de signal dans le cas où le taux moyen de bruit $M_2$ est connu, ce qui correspond à $\lambda$ infini. On a alors :

$$PF = e^{-M_2} \cdot \sum_{J=0}^{N_2} \frac{M_2^J}{J!}$$

Le taux de fausse détection TF s'obtient en remplaçant le taux de comptage $N_2$ par { $M_0$ } + { $M_2$ }, d'où la relation $g(TF, M_0, M_2) = 0$.

Le graphe de la figure 2 comprend une famille de droites parallèles correspondant chacune à une valeur de TF. Un graphe analogue peut être construit pour chaque valeur de $M_2$

La mémorisation de toutes les droites n'est pas nécessaire. On pourra ne mémoriser que les droites correspondant, par exemple, à $TF = 10^{-3}$, $10^{-4}$, $10^{-5}$ et $10^{-6}$. Pour chacune des droites à mémoriser, deux couples de points au moins doivent être stockés. Ce nombre pourra être augmenté si l'on estime que la linéarité est insuffisante.

La table mémorisée doit comprendre au moins deux graphes associés à deux valeurs de $M_2$. Plus précisément, cette première table comprend $k_1.k_2.k_3$ couples de points

$$(Log\ R,\ Log(1+\frac{1}{\lambda}))$$

si on utilise $k_1$ valeurs de $M_2$, $k_2$ valeurs de TF et $k_3$ points par droite.

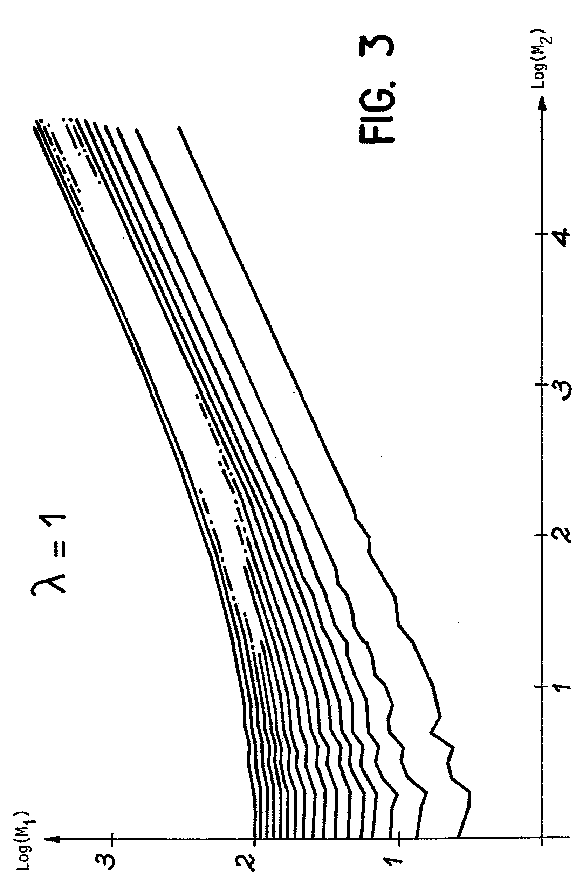

La figure 3 est un graphe montrant la relation sensiblement linéaire entre $Log(M_1)$ et $Log(M_2)$, à $\lambda$ fixé. Ce graphe comprend un ensemble de droites correspondant chacune à une valeur de TF. Le graphe correspondant à $\lambda$ infini représente la relation sensiblement linéaire entre $Log(M_0)$ et $Log(M_2)$. Ce graphe a une allure semblable à celui de la figure 3.

Pour la détection, conformément à l'invention, on construit une seconde table comportant $k_4.k_5$ couples de points $(Log(M_0), Log(M_2))$, où $k_4$ est le nombre de valeurs de TF considérées et $k_5$ le nombre de points par droite mémorisée ; $k_5$ est au moins égal à 2 pour chaque droite.

La première et la seconde tables étant construites et représentant la fonction $g(TF, M_1, M_2, \lambda)=0$, la détection selon l'invention comporte les opérations successives suivantes.

Les taux de comptages $N_2$ et $N_3$ étant mesurés, on estime la valeur $\lambda_E$ du rapport $\lambda$, par exemple de la manière dont on l'a indiqué plus haut, et on estime le taux moyen de bruit $M_2$ par le rapport $N_3/\lambda_E$ (car $M_2=M_3/\lambda$ et $N_3$ est une estimation de $M_3$).

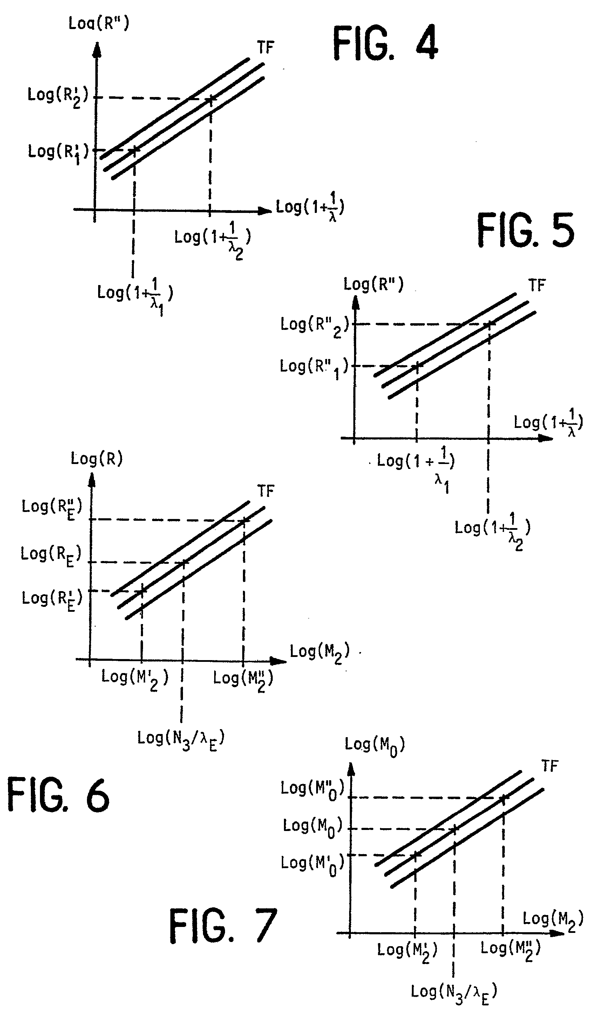

Il faut maintenant comparer le taux moyen de signal $M_1$, défini par le taux de fausse détection prédéterminé TF et les valeurs estimées $M_2$ et $\lambda_E$, au taux moyen de signal mesuré égal à $N_2-N_3/\lambda_E$. Les deux tables permettent d'obtenir $M_1$ avec un minimum de calculs. L'obtention de $M_1$ est illustrée par les figures 4 à 7. Cette valeur de $M_1$ résulte d'une double interpolation (ou extrapolation) ; une interpolation, ou extrapolation, sur $\lambda$ à $M_2$ constant puis une interpolation, ou extrapolation, sur $M_2$, ces interpolations, ou extrapolations, utilisant la première table.

On choisit d'abord des valeurs $\lambda_1$ et $\lambda_2$ de la première table proches de l'estimation $\lambda_E$, par exemple encadrant l'estimation $\lambda_E$, et des valeurs $M'_2$ et $M''_2$ de la première table proches de l'estimation $M_2$, par exemple encadrant l'estimation $M_2$.

On calcule alors par lecture dans la première table des couples $(Log(R'_1), Log(1+1/\lambda_1))$ et $(Log(R'_2), Log(1+1/\lambda_2))$ et par simple interpolation linéaire (si $\lambda_1$ et $\lambda_2$ encadrent $\lambda_E$) ou par extrapolation linéaire, $Log(R'_E)$ en fonction de $Log(1+1/\lambda_E)$ à $M'_2$ constant, comme indiqué sur le graphe de la figure 4 dans le cas de l'interpolation linéaire. On obtient de la même manière $Log(R''_E)$ en fonction du $Log(1+1/\lambda_E)$ à $M''_2$ constant, comme indiqué sur le graphe de la figure 5, dans le cas de l'interpolation linéaire.

En faisant une interpolation linéaire (si $M'_2$ et $M''_2$ encadrent $M_2$) ou une extrapolation linéaire sur la droite définie par les couples de points $(Log(R'_E), Log(M'_2))$ et $(Log(R''_E), Log(M''_2))$, on déduit la valeur $Log(R)$ associée à l'estimation $Log(N_3/\lambda_E)$ de $Log(M_2)$ (figure 6).

Par ailleurs, par interpolation linéaire ou extrapolation linéaire des valeurs $Log(M'_0)$ et $Log(M''_0)$ données par la deuxième table et correspondant aux abscisses $Log(M'_2)$ et $Log(M''_2)$, on obtient la valeur $Log(M_0)$ correspondant à l'estimation $Log(N_3/\lambda_E)$ de $Log(M_2)$ (figure 7).

De $Log(R)$ et $Log(M_0)$, on déduit $M_1$ par la relation $Log(M_1)=Log(R)+Log(M_0)$.

La valeur $M_1$ est ensuite comparée à son estimation $N_2-N_3/\lambda_E$. Si $M_1$ est supérieur à $N_2-N_3/\lambda_E$, on considère que le taux de comptage $N_2$ est dû uniquement au bruit ; dans le cas contraire, on considère qu'un signal pur a été détecté.

La comparaison entre la valeur $M_1$ du taux moyen de signal donnée par la table et la valeur estimée $N_2-N_3/\lambda_E$ est identique à la comparaison entre le taux de fausse détection TF et la probabilité de fausse détection PF, ou entre le seuil d'information $I_m$ et l'information I apportée par les comptages, pour la valeur estimée $\lambda_E$ de $\lambda$.

La comparaison entre la valeur estimée $N_2-N_3/\lambda_E$ et une unique valeur de $M_1$, définie par un taux de fausse détection prédéterminé TF, réalise une détection par seuil : un signal pur est présent si le seuil est franchi, absence de signal pur si le seuil n'est pas franchi.

Comme on l'a déjà indiqué, l'information peut être évaluée de manière plus quantitative. Cette évaluation de l'information utilise 1e suite des opérations qui viennent d'être décrites, celles-ci étant répétées pour plusieurs valeurs de TF, par exemple $10^{-3}$, $10^{-4}$, $10^{-5}$, $10^{-6}$. Le système détermine ainsi plusieurs valeurs du taux moyen de signal $M_1$, chacune associée à un taux de fausse détection, donc à un niveau d'information.

L'information I apportée par les comptages est comprise entre les informations I' et I" correspondant aux taux moyens de bruit $M'_1$ et $M''_1$ définis par $M'_1\ N_2-N_3/\lambda_E\ M''_1$.

L'information est définie conformément à l'invention par la relation

$$I=-Log\frac{PF}{1-PF}$$

La probabilité de fausse détection étant en général inférieure à $10^{-3}$, cette relation se traduit en pratique par $I = -LogPF$.

L'information I a donc une valeur usuelle de quelques unités, pour une base de logarithme égale à 10. La représentation graphique de l'information I en fonction du numéro du comptage, c'est-à-dire finalement en fonction du temps, constitue alors pour un opérateur une visualisation particulièrement claire et représentative.

## Revendications

1. Système de suppression du bruit et de ses variations pour la détection d'un signal pur dans un signal bruité discret mesuré comprenant en série un détecteur (2) pour convertir le rayonnement reçu en impulsions électriques, un moyen de mise en forme (4), un convertisseur analogique-numérique (6), un moyen de traitement (8), et un moyen de signalisation (10), ledit moyen de traitement comprenant un processeur (14), au moins une mémoire (16) et un circuit d'entrée-sortie (18), ledit système étant ceractérisé en ce que ledit processeur :
   - mesure le taux de comptage $N_2$ dans une voie de signal pendant des durées successives égales, ladite voie détectant les événements correspondant au signal pur attendu,
   - mesure le taux de comptage $N_3$ dans une voie de référence pendant les mêmes durées, ladite voie ne détectant pas les événements correspondant au signal pur attendu,
   - estime la valeur $\lambda_E$ du rapport $\lambda$ entre les taux moyens de bruit $M_3$ et $M_2$ dans la voie de référence et dans la voie de signal,
   - compare l'information I, correspondant à la probabilité de fausse détection associée aux comptages $N_2$, $N_3$ et l'estimation $\lambda_E$, à au moins un seuil $I_m$, chaque seuil $I_m$ correspondant à un taux de fausse détection prédéterminé,
   - commande le moyen de signalisation en fonction de la valeur de l'information I par rapport eux seuils $I_m$.

2. Système selon la revendication 1, caractérisé en ce que le processeur compare l'information I à un seuil unique $I_m$, un signal pur étant détecté si le seuil est franchi.

3. Système selon la revendication 1, caractérisé en ce que le processeur estime l'information I par comparaison à une pluralité de seuils $I_m$.

4. Système selon l'une quelconque des revendications 1 à 3, caractérisé en ce que le processeur compare la probabilité de feusse détection PF, associée à l'information I, au taux de fausse détection TF, associé à chaque seuil $I_m$, l'information I étant définie par

$$I = -Log \frac{PF}{1-PF}$$

et chaque seuil

$$I_m \text{ par } I_m = -Log \frac{TF}{1-TF}.$$

5. Système selon l'une quelconque des revendications 1 à 4, dans lequel on connaît une relation $g(TF, M_1, M_2, \lambda)=0$, où $M_1$ est le taux moyen de signal pur dans la voie de signal, caractérisé en ce que la détection est opérée de manière indirecte sur le taux moyen de signal pur, le processeur (14) comparant, pour au moins une valeur du taux de fausse détection TF, la valeur $M_1$ du teux moyen de signal pur correspondant à un taux de fausse détection pour les valeurs estimées $\lambda_E$ et $N_3/\lambda_E$ de $\lambda$ et $M_2$, au taux moyen de signal pur estimé $N_2-N_3/\lambda_E$.

6. Système selon la revendication 5, caractérisé en ce que la relation $g(TF, M_1, M_2, \lambda)=0$ est tabulée dans la mémoire (16).

7. Système selon la revendication 6 pour la détection d'un signal pour lequel $Log(M_1/M_0)$ est une fonction sensiblement linéaire de

$$Log(1+\frac{1}{\lambda}),$$

où $M_0$ est le taux moyen de signal pur lorsque le bruit est constant et pour lequel $LogM_0$ est une fonction sensiblement linéaire de $LogM_2$, système caractérisé en ce que la mémoire contient :
- une première table et une seconde table, ladite première table comprenant, pour chaque valeur de TF pris parmi un ensemble de $k_1$ valeurs et pour chaque valeur de $M_2$ pris parmi un ensemble de $k_2$ valeurs, au moins deux couples

$$(\text{Log}M_1/M_0, \quad \text{Log}(1/\tfrac{1}{\lambda})),$$

ladite seconde table comprenant, pour chaque valeur de TF pris parmi l'ensemble des $k_1$, au moins deux couples $(\text{Log}M_0, \text{Log}M_1)$, et en ce que le processeur:
- calcule , après chaque mesure et pour au moins une valeur de TF, $\text{Log}(M_1/M_0)$ correspondant au rapport $\lambda_E$ estimé, par interpolation ou extrapolation des valeurs contenues dans la première table, puis $\text{Log}M_0$ correspondant au taux moyen de bruit $M_2$ estimé, par interpolation ou extrapolation des valeurs contenues dans la seconde table,
- compare le taux moyen de signal estimé $N_2-N_3/\lambda_E$ à au moins un taux moyen de signal $M_1$, chacun défini par les valeurs $\text{Log}M_1/M_0$ et $\text{Log}M_0$ calculées.

8. Système selon la revendication 7, caractérisé en ce que la mémoire (16) comprend une première et une seconde tables pour plusieurs valeurs de TF, le processeur calculant le taux moyen de signal $M_1$ pour plusieurs valeurs de TF et estimant la probabilité de fausse detection en l'encadrant par les deux valeurs de TF correspondant aux deux valeurs de $M_1$ encadrant l'estimation $N_2-N_3/\lambda_E$.

9. Système selon l'une quelconque des revendications 1 à 8, caractérisé en ce que le processeur (14) estime une valeur $\lambda_E$ de $\lambda$ par la moyenne entre les rapports $N_3/N_2$ d'une suite de plusieurs comptages, lesdits comptages étant effectués en absence de signal.

10. Système selon la revendication 9, caractérisé en ce que la valeur estimé $\lambda_E$ de $\lambda$ est actualisée périodiquement.

**Patentansprüche**

1. System für die Unterdrückung des Rauschens und dessen Schwankungen, um ein reines Signal in einem verrauschten Signal festzustellen, das diskret gemessen wird, enthaltend in Serie einen Detektor (2) zum Umwandeln der in elektrischen Impulsen erhaltenen Strahlung, eine Formgebungseinrichtung (4), einen Analog-Digital-Wandler (6), eine Verarbeitungseinrichtung (8) und eine Signalisationseinrichtung (10), welche Verarbeitungseinrichtung enthält: einen Prozessor (14), wenigstens einen Speicher (16) und eine Eingangs-Ausgangs-Schaltung (18), welches System dadurch gekennzeichnet ist, daß der Prozessor:

die Impulsrate $N_2$ in einem Signalkanal während gleicher aufeinanderfolgender Zeitperioden mißt, welcher Kanal die Ereignisse ermittelt, die dem erwarteten reinen Signal entsprechen,

die Impulsrate $N_3$ in einem Bezugskanal während der gleichen Zeitperioden mißt, welcher Kanal nicht die dem erwarteten reinen Signal entsprechenden Ereignisse ermittelt,

den Wert $\lambda_E$ des Verhältnisses $\lambda$ zwischen den mittleren Rauschraten $M_3$ und $M_2$ im Bezugskanal und im Signalkanal abschätzt,

die Information I, die der Wahrscheinlichkeit falscher Ermittlung, die den Zählungen $N_2$, $N_3$ zugeordnet ist, und die Abschätzung $\lambda_E$ mit wenigstens einem Schwellenwert $I_m$ einer vorbestimmten Rate falscher Ermittlung entspricht.

die Signalisationseinrichtung in Abhängigkeit vom Wert der Information I gegenüber den Schwellenwerten $I_m$ ansteuert.

2. System nach Anspruch 1, dadurch gekennzeichnet, daß der Prozessor die Information I mit einzigen Schwellenwert $I_m$ vergleicht, wobei ein reines Signal ermittelt wird, wenn der Schwellenwert überschritten wird.

3. System nach Anspruch 1, dadurch gekennzeichnet, daß der Prozessor die Information I durch Vergleich mit mehreren Schwellenwerten $I_m$ abschätzt.

4. System nach einem der Ansprüche 1 bis 3, dadurch gekennzeichnet, daß der Prozessor die Wahrscheinlichkeit falscher Ermittlung PF, die der Information I zugeordnet ist, mit der Rate falscher Ermittlung TF, die jedem Schwellenwert $I_m$ zugeordnet ist, vergleicht, wobei die Information I durch

$$I=-\text{Log}\frac{PF}{1-PF}$$

und jeder Schwellenwert $I_m$ durch

$$I_m=-\text{Log}\frac{TF}{1-TF}$$

definiert sind.

5. System nach einem der Ansprüche 1 bis 4, in welchem man eine Beziehung $g\,(TF, M_1, M_2, \lambda) = 0$ kennt, wobei $M_1$ die mittlere Rate des reinen Signals im Signalkanal ist, dadurch gekennzeichnet, daß die Ermittlung auf indirekte Weise an der mittleren Rate des reinen Signals ausgeführt wird, wobei der Prozessor (14) für wenigstens einen Wert der Rate falscher Ermittlung TF den Wert $M_1$ der mittleren Rate des reinen Signals entsprechend einer Rate falscher Ermittlung für die geschätzten Werte $\lambda_E$ und $N_3/\lambda_E$ von $\lambda$ und $M_2$ mit der mittleren Rate des reinen abgeschätzten Signals $N_2-N_3/\lambda_E$ vergleicht.

6. System nach Anspruch 5, dadurch gekennzeichnet, daß die Beziehung g (TF, $M_1$, $M_2$, $\lambda$) = 0 in dem Speicher (16) als Tabelle enthalten ist.

7. System nach Anspruch 6 für die Ermittlung eines Signals, für das Log ($M_1/M_0$) eine im wesentlichen lineare Funktion von

$$Log \ (1+\frac{1}{\lambda})$$

ist, wobei $M_0$ die mittlere Rate des Signals ist, für den das Rauschen konstant ist und für das $LogM_0$ eine im wesentlichen lineare Funktion von $LogM_2$ ist, dadurch gekennzeichnet, daß der Speicher enthält:

eine erste Tabelle und eine zweite Tabelle, wobei die erste Tabelle für jeden aus einer Gruppe von $k_1$ Werten genommenen Wert von TF und für jeden unter einer Gruppe von $k_2$ Werten genommenen Wert von $M_2$ wenigstens zwei Paare

$$(LogM_1/M_0, \ Log(1/\frac{1}{\lambda}))$$

enthält, wobei die zweite Tabelle für jeden Wert von TF aus der Gruppe der $k_1$ wenigstens zwei Paare ($LogM_0$, $LogM_1$) enthält,
und daß der Prozessor:
nach jeder Messung und für wenigstens einen Wert von TF die Größe $Log(M_1/M_0)$ entsprechend dem geschätzten Verhältnis $\lambda$ berechnet durch Interpolation oder Extrapolation der in der ersten Tabelle enthaltenen Werte, dann $LogM_0$ entsprechend der mittleren abgeschätzten Rate des Rauschens $M_2$ durch Interpolation oder Extrapolation der in der zweiten Tabelle enthaltenen Werte,
die mittlere geschätzte Signalrate $N_2-N_3/\lambda_E$ mit wenigstens einer mittleren Signalrate $M_1$ vergleicht, jeweils definiert durch die berechneten Werte $LogM_1/M_0$ und $LogM_0$.

8. System nach Anspruch 7, dadurch gekennzeichnet, daß der Speicher (16) eine erste und eine zweite Tabelle für mehrere Werte von TF enthält, der Prozessor die mittlere Signalrate $M_1$ für mehrere Werte von TF berechnet und die Wahrscheinlichkeit falscher Ermittlung schätzt, indem er durch die zwei Werte von TF eingerahmt wird, die den zwei Werten von $M_1$ entsprechen, die die Abschätzung $N_2-N_3/\lambda_E$ einrahmen.

9. System nach einem der Ansprüche 1 bis 8, dadurch gekennzeichnet, daß der Prozessor (14) einen Wert $\lambda_E$ aus $\lambda$ durch den Mittelwert zwischen den Verhältnissen $N_3/N_2$ einer Folge mehrerer Zählungen abschätzt, wobei die Zählungen bei Signalabwesenheit ausgeführt werden.

10. System nach Anspruch 9, dadurch gekennzeichnet, daß der Schätzwert $\lambda_E$ von $\lambda$ periodisch aktualisiert wird.

**Claims**

1. System for the suppression of noise and its variations for the detection of a pure signal in a measured discrete noisy signal comprising in series a detector (2) for converting a radiation received into electrical pulses, a shaping means (4), an analog-digital converter (6), a processing means (8) and a signalling means (10), said processing means comprising a processor (14), at least one memory (16) and an input-output circuit (18), characterized in that said processor measures the counting rate $N_2$ in a signal channel during equal successive durations, said channel detecting the events corresponding to the expected pure signal, measures the counting rate $N_3$ in a reference channel for the same durations, said channel not detecting the events corresponding to the expected pure signal, estimates the value $\lambda_E$ of the ratio between the mean noise levels $M_3$ and $M_2$ in the reference channel an in the signal channel, compares the information I, corresponding to the false detection probality associated with the counts $N_2$, $N_3$ and the estimate $\lambda_E$, with at least one threshold $I_m$, corresponding to a predetermined false detection rate and controls the signalling means as a function of the value of the information I relative to the thresholds $I_m$.

2. System according to claim 1, characterized in that the processor compares the information I with a single threshold $I_m$, a pure signal being detected if the threshold is traversed.

3. System according to claim 1, characterized in that the processor estimates the information I by comparison with a plurality of thresholds $I_m$.

4. System according to any one of the claims 1 to 3, characterized in that the processor compares the false detection probability PF, associated with the information I, with the false detection level TF, associated with each threshold $I_m$, the information being defined by

$$I = -\text{Log} \frac{PF}{1 - PF}$$

and each threshold

$$I_m \text{ by } I_m = -\text{Log} \frac{TF}{1 - TF}.$$

5. System according to any one of the claims 1 to 4, in which a relation $g(TF, M_1, M_2, \lambda) = 0$, is known, in which $M_1$ is the mean pure signal level in the signal channel, characterized in that the detection is performed in an indirect manner on the mean pure signal level, the processor comparing for at least one value of the false detection level TF, the value M of the mean pure signal level corresponding to a false detection level for the estimated values $\lambda_E$ and $N_3/\lambda_E$ of and $M_2$ with the estimated mean pure signal level $N_2 - N_3/\lambda_E$.

6. System according to claim 5, characterized in that the relation $g(TF, M_1, M_2, \lambda) = 0$ is tabulated in the memory.

7. System according to claim 6, for detecting a signal for which $\text{Log}(M_1/M_0)$ is a substantially linear function of

$$\text{Log}\left(1+\frac{1}{\lambda}\right),$$

in which $M_0$ is the mean pure signal level when the noise is constant and for which $\text{Log } M_0$ is a substantially linear function of $\text{Log}M_2$, characterized in that the memory contains a first table and a second table, said first table comprising, for each value of TF between a group of $k_1$ values and for each value of $M_2$ between a group of $k_2$ values, at least two pairs

$$\left(\text{Log}M_1/M_0, \ \text{Log}\left(1/\frac{1}{\lambda}\right)\right),$$

said table comprising, for each value of TF taken from among the group of $k_1$, at least two pairs $(\text{Log}M_0, \text{Log}M_1)$, and in that the processor calculates, after each measurement and for at least one value of TF, $\text{Log}(m_1/M_0)$ corresponding to the ratio $\lambda_E$ estimated by the interpolation or extrapolation of the values contained in the first table, then $\text{Log}M_0$ corresponding to the mean noise level $M_2$ estimated by the interpolation or extrapolation of the values contained in the second table and compares the estimated mean signal level $N_2 - N_3/\lambda_E$ with at least one mean signal level $M_1$, defined by the calulated values $\text{Log}M_1/M_0$ and $\text{Log}M_0$.

8. System according to claim 7, characterized in that the memory (16) comprises first and second tables for several values of TF, the calculator calculating the mean signal level $M_1$ for several values of TF and estimating the false detection probability by surrounding it by the two values of TF corresponding to the two values of $M_1$ surrounding the estimate $N_2 - N_3/\lambda_E$.

9. System according to any one of the claims 1 to 8, characterized in that the processor estimates a value $\lambda_E$ of $\lambda$ by the mean between the ratios $N_3/N_2$ of a sequence of several counts, said counts being performed in the absence of a signal.

10. System according to claim 9, characterized in that the estimated value $\lambda_E$ of $\lambda$ is periodically updated.

FIG. 1

EP 0 200 596 B1

FIG. 2

FIG. 3

FIG. 4

FIG. 5

FIG. 6

FIG. 7